# EUROPEAN PATENT SPECIFICATION

(11) **EP 2 777 005 B1**
(45) Date of publication and mention of the grant of the patent: **29.08.2018**
(21) Application number: 12848545.5
(22) Date of filing: 07.11.2012
(51) Int. Cl.: H04L 29/08, H04W 4/21

(54) **DYNAMIC DETERMINATION OF NUMBER OF SERVED ADVERTISEMENTS**
DYNAMISCHE BESTIMMUNG DER ANZAHL VON BEREITGESTELLTEN WERBUNGEN
DÉTERMINATION DYNAMIQUE D'UN NOMBRE DE PUBLICITÉS DESSERVIES

(30) Priority: 08.11.2011 US 201113291149
(43) Date of publication of application: 17.09.2014
(73) Proprietor: Microsoft Technology Licensing, LLC, Redmond, WA 98052 (US)
(72) Inventor: WU, Gang, Redmond, Washington 98052-6399 (US); DANGALTCHEV, Tchavdar, Redmond, Washington 98052-6399 (US)
(74) Representative: Goddar, Heinz J.
(86) International application number: PCT/US2012/063761
(87) International publication number: WO 2013/070638

(56) References cited:
- KR-A- 20080 042 051
- US-A1- 2004 260 767
- US-A1- 2006 069 808
- US-A1- 2006 107 204
- US-A1- 2007 150 345
- US-A1- 2009 192 984
- US-A1- 2010 198 694
- US-A1- 2011 231 241

## Description

### BACKGROUND

Many search engine web pages include sponsored results or other advertisements on a search engine results page. These advertisements can be a major source of revenue for a search engine provider. Typically, the search engine matches advertisements to a given user query and displays the advertisements along with search results on the search engine results page. The advertisements commonly appear above the non-paid search results, or organic search results, as well as down the right-hand side of the search results page as for example disclosed in US20060069808.

Because publishers are commonly paid on a per-click basis, the number and location of advertisements can affect publisher revenue and advertiser budgets along with the relevancy of the advertisement to a user's query. However, even if an advertisement is highly relevant, publishers cannot increase their revenue if the advertisements are not seen by a user because, for example, the user's web browser is resized to allow another program window to be shown on his or her display. In addition, advertiser budgets can be wasted if advertisements are served in situations where there is no user viewing the advertisement (e.g., a click bot using a script to request advertisements).

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Various embodiments pertain to serving a number of advertisements in view of browser information and a user's interaction with a web page containing the advertisements. In at least some embodiments, information regarding the size of a user interface (e.g., window) in which the browser renders the web page, visibility of the browser user interface, or status of the browser can be obtained and utilized to determine a number of slots available for advertisements. In some embodiments, a page script can be used to obtain information regarding the size of a browser user interface in which the browser renders the web page, visibility of the browser user interface, or status of the browser. This is achieved by independent computer-implemented method claim 1, independent device claim 5 and independent storage media claim 8.

Preferred embodiments can be found in the dependent claims.

### BRIEF DESCRIPTION OF THE DRAWINGS

While the specification concludes with claims particularly pointing out and distinctly claiming the subject matter, it is believed that the embodiments will be better understood from the following description in conjunction with the accompanying figures, in which:
Fig. 1 is an illustration of an example environment in accordance with one or more embodiments;
Figs. 2A and 2B illustrate various example search engine results pages in accordance with one or more embodiments;
Fig. 3 illustrates an example process in accordance with one or more embodiments;
Fig. 4 illustrates another example process in accordance with one or more embodiments;
Fig. 5 illustrates an example process including multiple devices in accordance with one or more embodiments; and
Fig. 6 illustrates an example system that can be utilized to implement one or more embodiments.

### DETAILED DESCRIPTION

### Overview

Many search engines return one or more sponsored search results or advertisements along with one or more non-paid or organic search results in response to a user query. Advertisements can be displayed above and/or to the side of the non-paid search results. Because advertisements displayed to the side of non-paid search results generally receive fewer clicks from users than advertisements displayed above non-paid search results, search engine publishers can generate more revenue by selling more slots to display advertisements above the non-paid search results. However, because advertisements displayed above non-paid search results push those non-paid search results down in the list, users have to scroll down the page to access the non-paid search results, which can result in user frustration that can sometimes lead a user to use a competing search engine.

Various embodiments pertain to serving a number of advertisements in view of browser information and a user's interaction with the web page containing the advertisements. In various embodiments, information regarding the size of a browser user interface in which a browser renders the web page, visibility of the browser user interface, or status of the browser can be obtained and utilized to determine a number of slots available for advertisements. For example, if a browser is being used to render a web page on a screen of a mobile device, fewer advertisements can be served compared to when the same web page is rendered by a browser on a desktop monitor. In some embodiments, page script (e.g., JavaScript®) can be used to obtain information regarding the size of a browser user interface in which the browser renders the web page, visibility of the browser user interface, or status of the browser. For example, a page script executed on a client device can provide information regarding the dimensions of a browser user interface, whether or not the browser user interface is visible, and/or whether the browser is active (e.g., not overlapped by other program windows). This information can be used to determine a number of advertising slots available on the web page.

In the discussion that follows, a section entitled "Example Operating Environment" describes an operating environment in accordance with one or more embodiments. Next, a section entitled "Example Embodiments" describes various embodiments that enable a number of advertisement slots to be determined and presented as part of a search engine results page. Finally, a section entitled "Example System" discusses an example system that can be used to implement one or more embodiments.

Consider, now, an example operating environment in accordance with one or more embodiments.

### Example Operating Environment

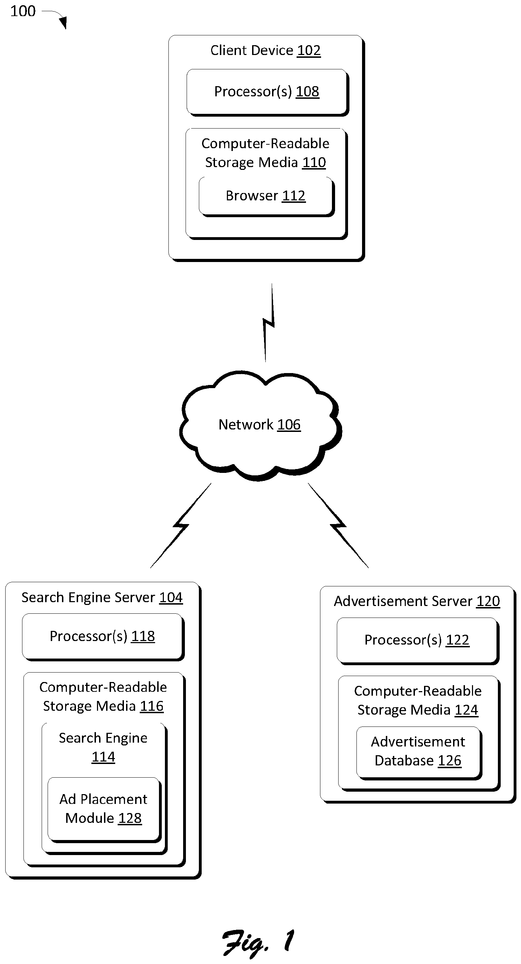

Fig. 1 is an illustration of an example environment 100 in accordance with one or more embodiments. Environment 100 includes a client device 102 communicatively coupled to a search engine server 104 through network 106.

Client device 102 can include one or more processors 108 and computer-readable storage media 110. Client device 102 can be embodied as any suitable computing device such as, by way of example and not limitation, a desktop computer, a portable computer, a netbook, a handheld computer such as a personal digital assistant (PDA), a cell phone, and the like.

Computer-readable storage media 110 includes one or more software applications, which can include a software executable module in the form of a web browser 112. Browser 112 can receive content from and send content to other servers, such as search engine server 104, via network 106, such as the Internet. Such content can include any suitable type of content that can be received from and sent to websites hosted by servers. In various embodiments, browser 112 is configured to send a user query to a search engine 114 and cause a search engine results page (SERP) received from the search engine server 104 be displayed to a user via client device 102.

Search engine 114 resides on computer-readable storage media 116 of search engine server 104. In addition to computer-readable storage media 116, search engine server 104 also includes one or more processors 118 configured to execute the software modules, e.g., search engine 114, residing on computer-readable storage media 116. In various embodiments, search engine 114 receives and processes a user query and returns a listing of web search results corresponding to the query. The listing of web results can be presented, for example, as a listing of hyperlinks that, when a user selects one of the hyperlinks, redirects the user's browser to the resultant web page, which can be hosted on an additional server connected to the network 106.

In addition to a listing of web results corresponding to the query, the search engine 114 can also return one or more advertisements to be displayed as part of the SERP. The advertisements can be displayed, for example, above the listing of web results in an area sometimes referred to as a "mainline", or to the side of the web results in an area sometimes referred to as a "sidebar", and can be selected to correspond to the user query processed by the search engine 114. The advertisements are sometimes referred to as "sponsored search results", while the non-paid web results are sometimes referred to as "organic search results".

Non-paid results can be selected by the search engine using any suitable technique. For example, a search engine can use automated search technology that selects and ranks web pages based on output from various mathematical search algorithms. The search algorithms can search databases using various criteria, such as keyword relevance, keyword similarity, and keyword synonyms. Other search engines can use information manually input by staff members charged with reviewing web page information. Other techniques can also be employed.

Advertisements or sponsored search results can be provided to the search engine server 104 by one or more advertisement servers 120. Advertisement server 120 can include one or more processors 122 and one or more computer-readable storage media 124, on which advertisement database 126 resides. Advertisement database 126 stores one or more advertisements provided by one or more advertisers and can transmit the advertisements through network 106 to the search engine server 104 for inclusion in the SERP. Each advertisement can be stored with one or more keywords and/or a bid for each keyword. When an advertisement or sponsored search result stored in the database is presented to a user and is selected by the user, the advertiser pays based on the amount of the bid to the search engine publisher.

The sponsored search results are selected and assigned a slot on the SERP by ad placement module 128 on search engine server 104. In addition to assigning sponsored search results to available sponsored search result slots on the SERP, ad placement module 128 can determine a total number of sponsored search result slots on the SERP, manage advertiser bids for sponsored search results, and perform other functions related to advertisement placement.

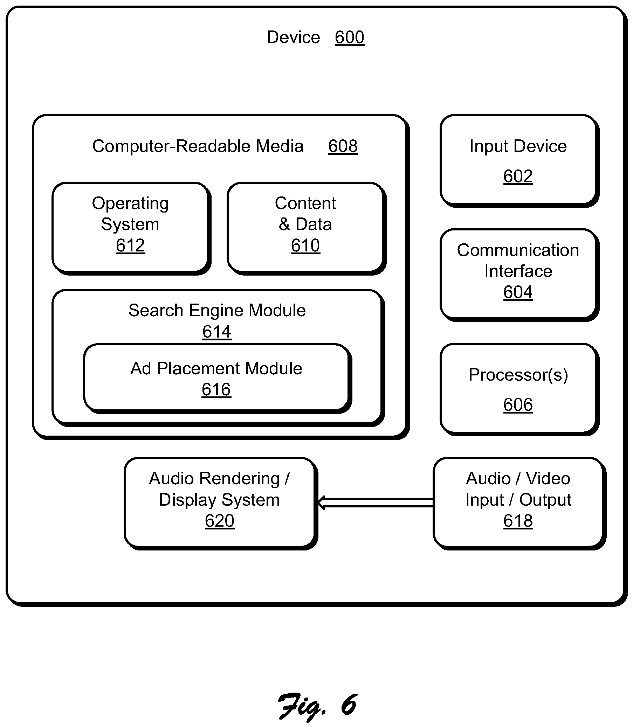

The computer-readable storage media included in each device or server can include, by way of example and not limitation, all forms of volatile and non-volatile memory and/or storage media that are typically associated with a computing device. Such media can include ROM, RAM, flash memory, hard disk, removable media and the like. One specific example of a computing device is shown and described below in Fig. 6.

Generally, any of the functions described herein can be implemented using software, firmware, hardware (e.g., fixed logic circuitry) or a combination of these implementations. The terms "module," "functionality" and "logic" as used herein generally represent software, firmware, hardware, or a combination thereof. In the case of a software implementation, the module, functionality, or logic represent program code that performs specified tasks when executed on a processor (e.g., CPU or CPUs). The program code can be stored in one or more computer-readable memory devices. The features of the user interface techniques described below are platform-independent, meaning that the techniques may be implemented on a variety of commercial computing platforms having a variety of processors.

Environment 100 is referenced by the following description of various embodiments in which advertisements can be served in view of browser information and a user's interaction with a web page containing the advertisements.

### Example Embodiments

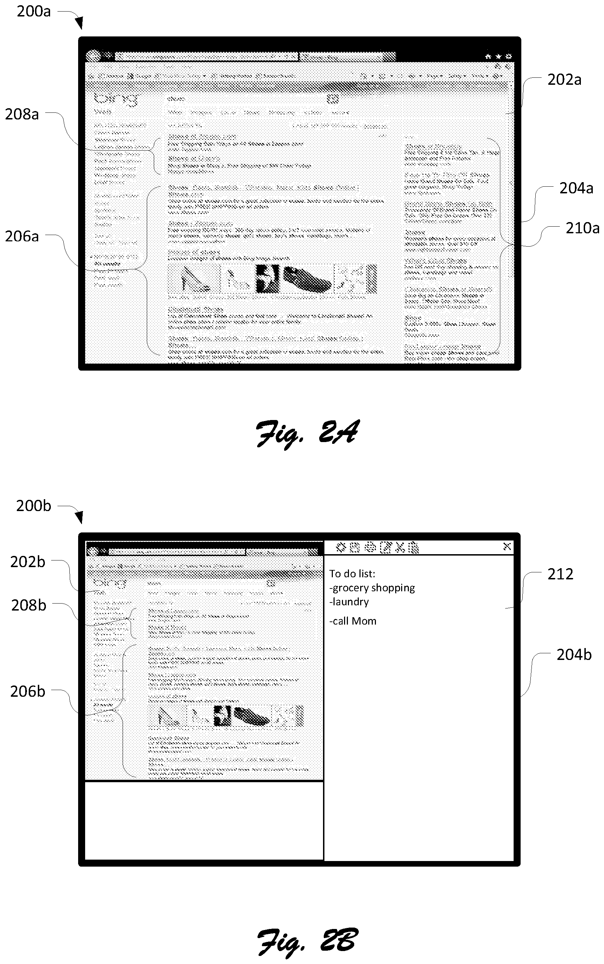

Figs. 2A and 2B illustrate two example views 200a and 200b of a web browser user interface displayed on a device. Taken together, the two views 200a and 200b illustrate but one example in which advertisements can be dynamically served.

Fig. 2A illustrates a web browser user interface 202a that is maximized within the viewing area 204a of a display. Web browser user interface 202a displays a search engine results page that includes a number of organic search results 206a, a number of advertisements 208a provided above the organic search results, and a number of advertisements 210a provided to the side of the organic search results. Each of the advertisements 208a and 210a is presented in one of a number of advertisement slots. In various embodiments, the number of total advertisement slots, the number of advertisement slots above the organic search results, and the number of advertisement slots along the side of the organic search results can vary depending on factors including, by way of example and not limitation, the size of a browser user interface in which the browser renders the web page, visibility of the browser user interface, or status of the browser (e.g., whether the browser user interface is on top or is overlapped by another window). Additionally, factors such as a number of advertisements relevant to a query for search results, the popularity of the query, a location from which the query was transmitted, and a user's browsing history can be considered when determining how many advertisement slots are available.

Fig. 2B illustrates a web browser user interface 202b within the viewing area 204b of a display. Like web browser user interface 202a, web browser user interface 202b displays a search engine results page that includes a number of organic search results 206b and a number of advertisements 208b provided above the organic search results. However, because web browser user interface 202b is not maximized, such as so that the user could also view a user interface 212 within the viewing area 204b, if the search engine results page shown in web browser user interface 202b includes a number of advertisements provided to the side of the organic search results, they will not be visible in view 200b. According to various embodiments, when a scenario such as that shown in Fig. 2B is detected, search engine server can provide a fewer number of advertisement slots in comparison to the number of advertisement slots provided in Fig. 2A.

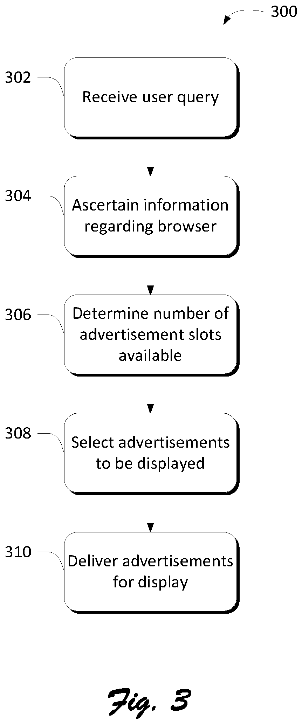

Fig. 3 is a flow diagram of an example process 300 for determining a number of advertisement slots in accordance with one or more embodiments. The method can be implemented in connection with any suitable hardware, software, firmware, or combination thereof. In at least some embodiments, the method can be implemented in software.

Block 302 receives a user query. This can be done in any suitable way. For example, a search engine server can receive a user-entered query through a network connection, such as the Internet.

Block 304 ascertains information regarding a browser. For example, the search engine server can provide a page script, such as JavaScript® (JavaScript® is a registered trademark of Oracle Corporation), to be executed by a browser on a client device. The page script can store information regarding the browser as a cookie on the client device. In various embodiments, a cookie, such as a session cookie, can include information such as the height of the browser user interface, the width of the browser user interface, the point of origin for a corner of the browser user interface (e.g., a location of the top-left corner of the browser user interface), status of the browser (e.g., whether the browser user interface is on top or is overlapped by another program), visible area of the browser user interface, an indication as to the visibility of the browser user interface, and the like. Other information can be included in the cookie (or other types of cookies) as well. For example, information regarding past queries, user credentials (e.g., a username and password), and user preferences can be stored by one or more cookies on the user device. In various embodiments, cookies can be used to provide tailored or personalized web pages to a user's web browser. Information stored in the cookies can be provided to the search engine server along with or subsequent to the user query. For example, the page script can automatically send the cookie to the search engine server via the network connection.

In other embodiments, information regarding a browser can be ascertained from information included with the user query. For example, information extracted from a raw hypertext transfer protocol (HTTP) header or user agent string can give information on a browser version or other information in accordance with the protocol.

Block 306 determines a number of advertisement slots available. This can be done in any suitable way. Various factors can be considered when determining a number of advertisements to display on a SERP. For example, the number of advertisement slots can be correlated to the height and width of the browser user interface, the top-left origin of the browser user interface, whether the browser user interface is visible or not, or browser status information (e.g., whether the browser user interface is on top or is overlapped by another program). In various embodiments, the number of advertisement slots can be correlated to an area of the browser or display, or a calculated area of browser visible when the browser user interface is overlapped by another program. For example, if the browser user interface is not on top, e.g., the browser user interface is overlapped by another program user interface or is otherwise not visible, block 306 can determine that zero advertisement slots are available.

As an example, a search engine server can correlate a number of advertisements to the visible area of the browser user interface in square inches, such as through the use of a look up table or other appropriate method. For instance, when the visible area of the browser user interface is less than or equal to two square inches (e.g., the browser user interface may not be visible or the height and/or width of the browser user interface were not returned), no advertisements are delivered; when the visible area of the browser user interface is between two and eight square inches (e.g., the browser user interface is likely to be on a mobile device), one advertisement is delivered; when the visible area of the browser user interface is between eight and thirty-two square inches (e.g., the browser user interface is not maximized), three advertisements are delivered; and when the visible area of the browser user interface is greater than thirty-two square inches (e.g., the browser user interface is maximized on a desktop display), eight advertisements are delivered. The numbers for both area and the number of advertisements to be displayed are provided merely as examples, and can vary depending on the particular embodiment. Additionally, other factors can additionally be taken into account to determine a number of advertisement slots available. For example, after the area or other browser information is utilized to provide a first number of advertisement slots, that number can be further adjusted up or down depending on user preference or history of interaction with advertisements or based on the user query.

In various embodiments, the search engine server can determine that no advertisements should be served in a particular location relative to the organic search results. For example, if information regarding the browser indicates that a browser user interface has a width below a particular threshold, the search engine server can determine that no advertisements should be served along the side of the organic search results because a user is unlikely to scroll to the side to view the advertisements.

Once the number of advertisement slots available is determined, block 308 selects the advertisements to be displayed. This can be done in any suitable way. The search engine server can select, for example, the top three revenue generators associated with a keyword, top bidders, or the like. An amount of expected revenue can be estimated based on how much revenue has been received when the advertisement was previously displayed or the past amount of revenue generated by the advertisement. As another example, advertisements can be selected according to an assigned rank. The search engine server or another entity can assign each advertisement a ranking based on information such as an estimated click-through rate, a bid, or an amount of advertiser budget available. The search engine server can select a number of advertisements to be displayed in a corresponding number of advertisement slots. For example, the number of advertisements to be displayed can be less than or equal to the number of advertisement slots available.

Block 310 delivers the advertisements for display as part of the SERP. This can be done in any suitable way. For example, the search engine server can transmit the advertisements with or separate from the organic search results to be displayed.

Process 300 can be implemented in a variety of embodiments to determine a number of slots in which advertisements can be provided to a user. However, in various embodiments, browser information may not be provided, or information is provided that can suggest that a query has been generated by a program, such as a click bot, rather than an actual user.

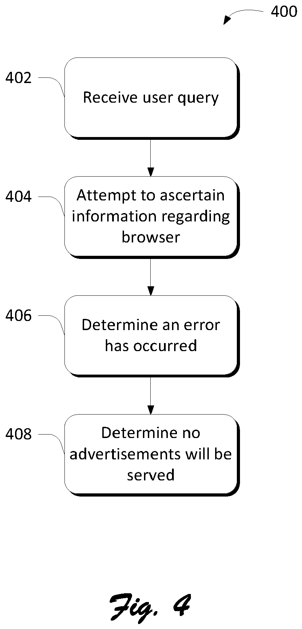

Fig. 4 is a flow diagram of an example process 400 for determining that no advertisements should be served in accordance with one or more embodiments. The method can be implemented in connection with any suitable hardware, software, firmware, or combination thereof. In at least some embodiments, the method can be implemented in software.

Block 402 receives a user query. This can be done in any suitable way. For example, a search engine server can receive a user-entered query through a network connection, such as the Internet.

Block 404 attempts to ascertain information regarding a browser. For example, the search engine server can provide a page script, such as JavaScript® (JavaScript® is a registered trademark of Oracle Corporation), to be executed by a browser on a client device.

Block 406 determines an error has occurred. This can be done in any suitable way. In various embodiments, an error is determined to have occurred responsive to the attempt to ascertain information resulting in a null response. For example, the search engine server may find no information or information suggesting that a browser is not being utilized, and may conclude that there has been an error. The error may result from various scenarios. For example, a client device can prevent the page script from being executed, or the page script can return incomplete information regarding the browser. Incomplete information regarding the browser can be returned, for instance, when a program or click bot "pretends" to use a browser and allows the page script to be executed, but the page script is unable to determine browser-dependent information, such as the height and width of the browser user interface, the top-left origin of the browser user interface, whether the browser user interface is visible or not, or browser status information (e.g., whether the browser user interface is on top or is overlapped by another program user interface). In other embodiments, the search engine server can determine that at least one of the values provided to represent information regarding the browser is a false value.

Responsive to determining an error has occurred, block 408 determines that no advertisements will be served. This can be done in any suitable way. For example, the search engine server can return a search engine results page containing organic search results without including advertisements. In some embodiments, a limited number of advertisements are served rather than none. By serving a limited number or no advertisements when information regarding a browser is not available or provided, the search engine server can preserve the advertiser's budget for instances in which it is more likely that a user, rather than a click bot, for example, is viewing, and clicking, on the advertisement. In other words, likelihood that a click is attributed to a program rather than an interested consumer can be reduced and an advertiser can see a greater return on investment.

While Figs. 3 and 4 describe processes with respect to one device, for example, a search engine server, various aspects of one or more embodiments can further be described with reference to a process including multiple devices, such as a search engine server and a client device.

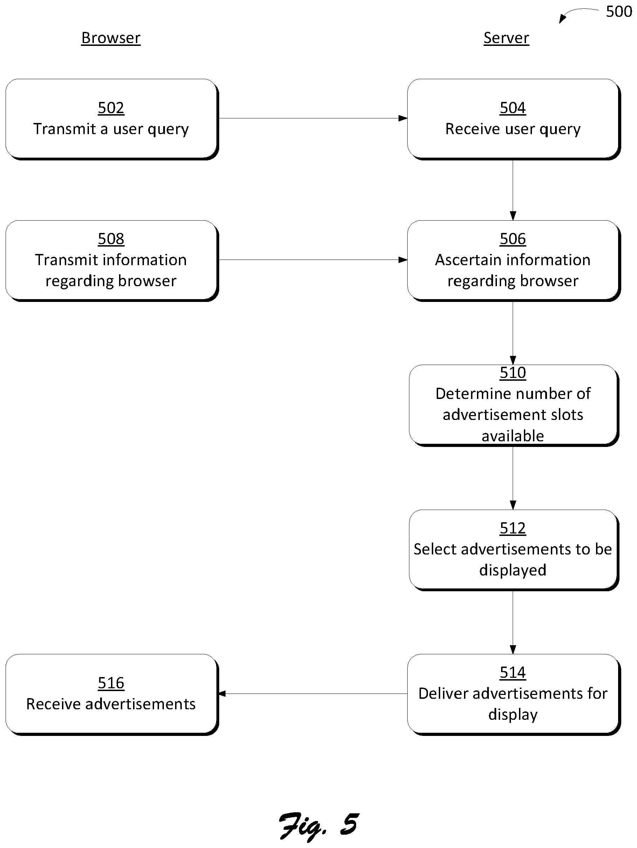

Fig. 5 is a flow diagram of an example process 500 for determining a number of advertisement slots in accordance with one or more embodiments. The process can be performed in connection with any suitable hardware, software, firmware, or combination thereof. In the illustrated example, some steps of the process are illustrated as being performed by a "Browser," while other steps of the process are illustrated as being performed by a "Server." In at least some embodiments, the process can be performed by a suitably-configured web browser, such as the one described above.

Block 502 transmits a user query. This can be performed in any suitable way. For example, a user can input a query into a search engine web page displayed via a browser user interface on the user's device, and the query can be transmitted via a network, such as the Internet.

Block 504 receives the user query. This can be done in any suitable way. For example, a search engine server can receive the query via the network.

Block 506 ascertains information regarding the browser. This can be done in any suitable way, examples of which are provided above and below. For example, block 508 can transmit information regarding the browser via the network.

Block 508 can transmit information regarding the browser in any suitable way. For example, responsive to executing a page script (e.g., JavaScript®) received from the search engine server, the browser can store information in a cookie to be detected by the search engine server. As another example, the page script can cause the browser to automatically transmit the information to the search engine server without the need for the search engine server to detect the cookie.

Responsive to ascertaining information regarding the browser in block 506, block 510 determines the number of advertisement slots available. This can be performed in any suitable way, examples of which are provided above and below. For example, the search engine server can determine a number of advertisement slots available above organic search results on a search engine results page and to a side of the organic search. In various embodiments, when block 506 ascertains information indicative of the user query being received from a program, such as a click bot, such as when no browser information is received or a value to be ascertained is null, block 510 can determine that zero advertisement slots are available. In some embodiments, block 510 determines that a limited number (e.g., one or two) of advertisement slots are available rather than zero. In some embodiments, once block 510 determines a number of advertisement slots based on the browser information, the number of advertisement slots can be further adjusted, such as according to the user query received. For example, based on the browser information, block 510 can determine that four advertisement slots are available. If the user query is a query that is not popular or has only a few advertisements related to it, the number of advertisement slots can be reduced to three.

Block 512 selects advertisements to be displayed. The number of advertisements to be selected can be less than or equal to the number of advertisement slots determined to be available in block 510. The selection of advertisements can be performed in any suitable way. For example, the search engine server can search a database of available advertisements that relate to the user query, and select advertisements based on a revenue history for the advertisements, bids entered by the advertisers, or the like. It is to be understood and appreciated that additional factors for selecting advertisements can be utilized, depending on the particular embodiment.

Block 514 delivers advertisements, if any, for display. This can be done in any suitable way. For example, the advertisements can be transmitted via the network with a listing of web results for display.

Block 516 receives advertisements. This can be performed in any suitable way. For example, the browser can receive advertisements for display with a search engine results page and can cause the page to be displayed to a user. In various embodiments, the browser receives the advertisements along with a listing of web results corresponding to the query transmitted in block 502.

In some embodiments, when no browser information is received, when a value to be ascertained is null, or when block 510 otherwise determines that zero advertisement slots are available, blocks 512, 514, and 516 are not performed.

Having described various processes for determining a number of advertising slots to be included on a search engine results page, consider the following description of an example system that can be used to implement one or more embodiments.

### Example System

Fig. 6 illustrates various components of an example device 600 that can practice the embodiments described above. In one or more embodiments, device 600 can be implemented as a server, such as search engine server 104 in Fig. 1.

Device 600 includes input device 602 that may include Internet Protocol (IP) input devices as well as other input devices, such as a keyboard. Device 600 further includes communication interface 604 that can be implemented as any one or more of a wireless interface, any type of network interface, and as any other type of communication interface. A network interface provides a connection between device 600 and a communication network by which other electronic and computing devices can communicate data with device 600. A wireless interface can enable device 600 to operate as a mobile device for wireless communications.

Device 600 also includes one or more processors 606 (e.g., any of microprocessors, controllers, and the like) which process various computer-executable instructions to control the operation of device 600 and to communicate with other electronic devices. Device 600 can be implemented with computer-readable media 608, such as one or more memory components, examples of which include random access memory (RAM) and non-volatile memory (e.g., any one or more of a read-only memory (ROM), flash memory, EPROM, EEPROM, etc.). A disk storage device may be implemented as any type of magnetic or optical storage device, such as a hard disk drive, a recordable and/or rewriteable compact disc (CD), any type of a digital versatile disc (DVD), and the like.

Computer-readable media 608 provides data storage to store content and data 610, as well as device executable modules and any other types of information and/or data related to operational aspects of device 600. One such configuration of a computer-readable medium is signal bearing medium and thus is configured to transmit the instructions (e.g., as a carrier wave) to the hardware of the computing device, such as via the network 106. The computer-readable medium may also be configured as a computer-readable storage medium and thus is not a signal bearing medium. Examples of a computer-readable storage medium include a random access memory (RAM), read-only memory (ROM), an optical disc, flash memory, hard disk memory, and other memory devices that may use magnetic, optical, and other techniques to store instructions and other data. The storage type computer-readable media are explicitly defined herein to exclude propagated data signals.

An operating system 612 can be maintained as a computer executable module with the computer-readable media 608 and executed on processor 606. Device executable modules can also include a search engine module 614 which can include an ad placement module 616 that operates as described above and below. Ad placement module 616 can be, for example, ad placement module 128.

Device 600 also includes an audio and/or video input/output 618 that provides audio and/or video data to an audio rendering and/or display system 620. The audio rendering and/or display system 620 can be implemented as integrated component(s) of the example device 600, and can include any components that process, display, and/or otherwise render audio, video, and image data.

As before, the blocks may be representative of modules that are configured to provide represented functionality. Further, any of the functions described herein can be implemented using software, firmware (e.g., fixed logic circuitry), manual processing, or a combination of these implementations. The terms "module," "functionality," and "logic" as used herein generally represent software, firmware, hardware, or a combination thereof. In the case of a software implementation, the module, functionality, or logic represents program code that performs specified tasks when executed on a processor (e.g., CPU or CPUs). The program code can be stored in one or more computer-readable storage devices. The features of the techniques described above are platform-independent, meaning that the techniques may be implemented on a variety of commercial computing platforms having a variety of processors.

While various embodiments have been described above, it should be understood that they have been presented by way of example, and not limitation. It will be apparent to persons skilled in the relevant art(s) that various changes in form and detail can be made therein without departing from the scope of the present disclosure. Thus, embodiments should not be limited by any of the above-described exemplary embodiments, but should be defined only in accordance with the following claims and their equivalents.

## Claims

1. A computer-implemented method comprising:
receiving a user query from an user device (102);
ascertaining information regarding a web browser (112) from which the query was received; determining a first number of advertisement slots available on a search engine results page based on the information regarding a visibility of a web browser user interface (202a,202b) displayed on the user device; and
adjusting the first number of advertisement slots up or down depending on user preference or history of interaction with advertisements or on the user query; and
returning, to the user device, a listing of web results corresponding to the user query and a number of advertisements to be displayed on the search engine results page in the adjusted number of advertisement slots available.

2. The computer-implemented method of claim 1, further comprising:
selecting advertisements to be displayed, the advertisements to be displayed numbering less than or equal to the number of advertisement slots available; and
delivering the advertisements to be displayed.

3. The computer-implemented method of claim 1, wherein said determining comprises determining a number of advertisement slots available to a side of a number of organic search results (206a) on a search engine results page.

4. The computer-implemented method of claim 1, wherein the information regarding the visibility of the web browser user interface (202a; 202b) comprises one or more of a height of a web browser user interface, a width of the web browser user interface, a point of origin for a corner of the web browser user interface, a status of the web browser, or a visible area of the web browser user interface.

5. A device (600) comprising:
one or more processors (118; 606);
one or more computer-readable storage media (116; 608);
one or more modules embodied on the one or more computer-readable storage media and executable under the influence of the one or more processors, the one or more modules comprising:
a search engine (114; 614) configured to receive and process a user query from an user device (102); and
an ad placement module (128; 616) configured to:
ascertain information regarding a web browser (112) from which the query was received;
responsive ascertaining information regarding the web browser, determine a first number of advertisement slots available on the search engine results page based on the information regarding a visibility of a web browser user interface (202a,202b) displayed on the user device; and
adujst the first number of advertisement slots up or down depending on user preference or history of interaction with advertisements or on the user query; and returning, to the user device, a listing of web results corresponding to the user query and a number of advertisements to be displayed on the search engine results page in the adjusted number of advertisement slots available.

6. The device of claim 5, the ad placement module (128; 616) further configured to:
determine, responsive to attempting to ascertain information regarding the web browser, an error has occurred; and
responsive to determining the error has occurred, determine no advertisement slots are available.

7. The device of claim 5, the ad placement module (128; 616) further configured to:
select advertisements to be displayed, the advertisements to be displayed numbering less than or equal to the number of advertisement slots available; and
deliver the advertisements to be displayed on the search engine results page.

8. One or more computer-readable storage media comprising instructions that are executable to cause a user device (102) to perform a process comprising:
transmitting, to a search engine (114; 614), a user query;
determining whether a web browser user interface is visible on a display of the user device;
transmitting, to the search engine, information regarding a web browser (112) and a visibility of the web browser user interface (202a, 202b) displayed on the user device, the information being configured to enable a determination of a first number of advertisement slots available on a search engine results page for advertisements; and
receiving, from the search engine, a listing of web results corresponding to the user query and the number of advertisements to be displayed on a search engine results page in an adjusted number of advertisement slots available based on the transmitted information regarding the web browser and the visibility of the web browser interface displayed on the user device.

9. The one or more computer-readable storage media of claim 8, wherein the information regarding the visibility of the web browser user interface (202a; 202b) comprises one or more of a height of a web browser user interface, a width of the web browser user interface, a point of origin for a corner of the web browser user interface, a status of the web browser, or a visible area of the web browser user interface.

## Patentansprüche

1. Computerimplementiertes Verfahren, umfassend:
Empfangen einer Benutzeranfrage von einem Benutzergerät (102);
Erheben von Information bezüglich eines Webbrowsers (112), von dem die Anfrage empfangen wurde;
Ermitteln einer ersten Anzahl von Werbeanzeigen-Slots, die auf einer Suchmaschinenergebnisseite verfügbar sind, basierend auf der Information bezüglich einer Sichtbarkeit einer auf dem Benutzergerät angezeigten Webbrowser-Benutzeroberfläche (202a; 202b);
Anpassen der ersten Anzahl von Werbeanzeigen-Slots nach oben oder unten, abhängig von einer Benutzerpräferenz oder einer Interaktionshistorie mit Werbeanzeigen oder von der Benutzeranfrage; und
Zurücksenden einer der Benutzeranfrage entsprechenden Auflistung von Ergebnissen und einer Anzahl von Werbeanzeigen, die auf der Suchmaschinenergebnisseite in der angepassten Anzahl von verfügbaren Werbeanzeigen-Slots angezeigt werden sollen, an das Benutzergerät.

2. Computerimplementiertes Verfahren nach Anspruch 1, ferner umfassend:
Auswählen von anzuzeigenden Werbeanzeigen, wobei die anzuzeigenden Werbeanzeigen numerisch kleiner oder gleich der Anzahl der verfügbaren Werbeanzeigen-Slots sind; und
Ausliefern der anzuzeigenden Werbeanzeigen.

3. Computerimplementiertes Verfahren nach Anspruch 1, wobei das Ermitteln ein Ermitteln einer Anzahl von Werbeanzeigen-Slots umfasst, die an einer Seite einer Anzahl von organischen Suchergebnissen (206a) auf einer Suchmaschinenergebnisseite verfügbar sind.

4. Computerimplementiertes Verfahren nach Anspruch 1, wobei die Information bezüglich der Sichtbarkeit der Webbrowser-Benutzeroberfläche (202a; 202b) eine oder mehrere von einer Höhe einer Webbrowser-Benutzeroberfläche, einer Breite der Webbrowser-Benutzeroberfläche, einem Ursprungspunkt für eine Ecke der Webbrowser-Benutzeroberfläche, einem Status des Webbrowsers oder einem sichtbaren Bereich der Webbrowser-Benutzeroberfläche umfasst.

5. Vorrichtung (600) umfassend:
einen oder mehrere Prozessoren (118; 606);
ein oder mehrere computerlesbare Speichermedien (116; 608);
ein oder mehrere Module, die auf dem einen oder den mehreren computerlesbaren Speichermedien enthalten sind und unter dem Einfluss des einen oder der mehreren Prozessoren ausführbar sind, wobei das eine oder die mehreren Module umfassen:
eine Suchmaschine (114; 614), die konfiguriert ist, um eine Benutzeranfrage von einem Benutzergerät (102) zu empfangen und zu verarbeiten; und
ein Werbeanzeigenplatzierungsmodul (128; 616), das konfiguriert ist, zum:
Erheben von Information bezüglich eines Webbrowsers (112), von dem die Anfrage empfangen wurde,
responsiven Erheben von Information bezüglich des Webbrowsers,
Ermitteln einer ersten Anzahl von Werbeanzeigen-Slots, die auf der Suchmaschinenergebnisseite verfügbar sind, basierend auf der Information bezüglich einer Sichtbarkeit einer auf dem Benutzergerät angezeigten Webbrowser-Benutzeroberfläche (202a; 202b); und
Anpassen der ersten Anzahl von Werbeanzeigen-Slots nach oben oder unten, abhängig von einer Benutzerpräferenz oder einer Interaktionshistorie mit Werbeanzeigen oder von der Benutzeranfrage; und Zurücksenden einer der Benutzeranfrage entsprechenden Auflistung von Ergebnissen, und einer Anzahl von Werbeanzeigen, die auf der Suchmaschinenergebnisseite in der angepassten Anzahl von verfügbaren Werbeanzeigen-Slots angezeigt werden sollen, an das Benutzergerät.

6. Vorrichtung nach Anspruch 5, wobei das Werbeanzeigenplatzierungsmodul (128; 616) ferner konfiguriert ist, zum:
Ermitteln, responsiv zu einem Versuchen, Information über den Webbrowser zu erheben, dass ein Fehler aufgetreten ist; und
responsiv zum Ermitteln, dass der Fehler aufgetreten ist, Ermitteln, dass keine Werbeanzeigeplätze verfügbar sind.

7. Vorrichtung nach Anspruch 5, wobei das Werbeanzeigenplatzierungsmodul (128; 616) ferner konfiguriert ist, zum:
Auswählen von anzuzeigenden Werbeanzeigen, wobei die anzuzeigenden Werbeanzeigen numerisch kleiner oder gleich der Anzahl von verfügbaren Werbeanzeigenplätzen sind; und
Ausliefern der auf der Suchmaschinenergebnisseite anzuzeigenden Werbeanzeigen.

8. Ein oder mehrere computerlesbare Speichermedien, die Anweisungen umfassen, die ausführbar sind, um ein Benutzergerät (102) dazu zu veranlassen, einen Prozess durchzuführen, umfassend:
Übermitteln einer Benutzeranfrage an eine Suchmaschine (114; 614);
Ermitteln, ob eine Webbrowser-Benutzeroberfläche auf einem Display des Benutzergeräts sichtbar ist;
Übermitteln von Information bezüglich eines Webbrowsers (112) und einer Sichtbarkeit der auf dem Benutzergerät angezeigten Webbrowser-Benutzeroberfläche (202a; 202b) an die Suchmaschine, wobei die Information konfiguriert ist, um eine Bestimmung einer ersten Anzahl von verfügbaren Werbeanzeigen-Slots für Werbeanzeigen auf einer Suchmaschinenergebnisseite zu ermöglichen; und
Empfangen, von der Suchmaschine, einer Auflistung der der Benutzeranfrage entsprechenden Web-Ergebnisse und der Anzahl von auf einer Suchmaschinenergebnisseite anzuzeigenden Werbeanzeigen, in einer angepassten Anzahl von verfügbaren Werbeanzeigen-Slots, basierend auf der übermittelten Information bezüglich des Webbrowsers und der Sichtbarkeit der auf dem Benutzergerät angezeigten Webbrowser-Benutzeroberfläche.

9. Ein oder mehrere computerlesbare Speichermedien nach Anspruch 8, wobei die Information bezüglich der Sichtbarkeit der Webbrowser-Benutzeroberfläche (202a; 202b) eine oder mehrere von einer Höhe einer Webbrowser-Benutzeroberfläche, einer Breite der Webbrowser-Benutzeroberfläche, einem Ursprungspunkt für eine Ecke der Webbrowser-Benutzeroberfläche, einem Status des Webbrowsers oder einem sichtbaren Bereich der Webbrowser-Benutzeroberfläche umfasst.

## Revendications

1. Procédé mis en oeuvre par ordinateur comprenant les étapes ci-dessous consistant à :
recevoir une requête d'utilisateur provenant d'un dispositif utilisateur (102) ;
confirmer des informations concernant un navigateur web (112) à partir duquel la requête a été reçue ; déterminer un premier nombre de créneaux publicitaires disponibles sur une page de résultats de moteur de recherche, sur la base des informations concernant la visibilité d'une interface utilisateur de navigateur web (202a, 202b) affichée sur le dispositif utilisateur ; et
ajuster le premier nombre de créneaux publicitaires, à la hausse ou à la baisse, en fonction d'une préférence d'utilisateur ou de l'historique d'interaction avec les publicités ou de la requête d'utilisateur ; et
renvoyer, au dispositif utilisateur, une liste de résultats web correspondant à la requête d'utilisateur et à un nombre de publicités à afficher sur la page de résultats de moteur de recherche parmi le nombre ajusté de créneaux publicitaires disponibles.

2. Procédé mis en oeuvre par ordinateur selon la revendication 1, comprenant en outre les étapes ci-dessous consistant à :
sélectionner des publicités à afficher, les publicités à afficher étant en nombre inférieur ou égal au nombre de créneaux publicitaires disponibles ; et
délivrer les publicités à afficher.

3. Procédé mis en oeuvre par ordinateur selon la revendication 1, dans lequel ladite étape de détermination consiste à déterminer un nombre de créneaux publicitaires disponibles d'un côté d'un nombre de résultats de recherche organique (206a) sur une page de résultats de moteur de recherche.

4. Procédé mis en oeuvre par ordinateur selon la revendication 1, dans lequel les informations concernant la visibilité de l'interface utilisateur de navigateur web (202a ; 202b) comprennent une ou plusieurs caractéristiques parmi une hauteur d'une interface utilisateur de navigateur web, une largeur de l'interface utilisateur de navigateur web, un point d'origine pour un coin de l'interface utilisateur de navigateur web, un état du navigateur web, ou une zone visible de l'interface utilisateur de navigateur web.

5. Dispositif (600) comprenant :
un ou plusieurs processeurs (118 ; 606) ;
un ou plusieurs supports de stockage lisibles par ordinateur (116 ; 608) ;
un ou plusieurs modules incorporés sur ledit un ou lesdits plusieurs supports de stockage lisibles par ordinateur et exécutables sous l'influence dudit un ou desdits plusieurs processeurs, ledit un ou lesdits plusieurs modules comprenant :
un moteur de recherche (114 ; 614) configuré de manière à recevoir et à traiter une requête d'utilisateur provenant d'un dispositif utilisateur (102) ; et
un module de placement publicitaire (128 ; 616) configuré de manière à :
confirmer des informations concernant un navigateur web (112) à partir duquel la requête a été reçue ;
en réponse à la confirmation des informations concernant le navigateur web, déterminer un premier nombre de créneaux publicitaires disponibles sur la page de résultats de moteur de recherche, sur la base des informations concernant la visibilité d'une interface utilisateur de navigateur web (202a, 202b) affichée sur le dispositif utilisateur ; et
ajuster le premier nombre de créneaux publicitaires, à la hausse ou à la baisse, en fonction d'une préférence d'utilisateur ou de l'historique d'interaction avec les publicités ou de la requête d'utilisateur ; et
renvoyer, au dispositif utilisateur, une liste de résultats web correspondant à la requête d'utilisateur et à un nombre de publicités à afficher sur la page de résultats de moteur de recherche parmi le nombre ajusté de créneaux publicitaires disponibles.

6. Dispositif selon la revendication 5, dans lequel le module de placement publicitaire (128 ; 616) est en outre configuré de manière à :
déterminer, après avoir tenté de confirmer les informations concernant le navigateur web, qu'une erreur s'est produite ; et
en réponse à la détermination que l'erreur s'est produite, déterminer qu'aucun créneau publicitaire n'est disponible.

7. Dispositif selon la revendication 5, dans lequel le module de placement publicitaire (128 ; 616) est en outre configuré de manière à :
sélectionner des publicités à afficher, les publicités à afficher étant en nombre inférieur ou égal au nombre de créneaux publicitaires disponibles ; et
délivrer les publicités à afficher sur la page de résultats de moteur de recherche.

8. Un ou plusieurs supports de stockage lisibles par ordinateur comprenant des instructions qui sont exécutables pour amener un dispositif utilisateur (102) à mettre en oeuvre un processus comprenant les étapes ci-dessous consistant à :
transmettre, à un moteur de recherche (114 ; 614), une requête d'utilisateur ;
déterminer si une interface utilisateur de navigateur web est visible sur un écran d'affichage du dispositif utilisateur ;
transmettre, au moteur de recherche, des informations concernant un navigateur web (112) et une visibilité de l'interface utilisateur de navigateur web (202a, 202b) affichée sur le dispositif utilisateur, les informations étant configurées de manière à permettre la détermination d'un premier nombre de créneaux publicitaires disponibles sur une page de résultats de moteur de recherche pour des publicités ; et
recevoir, en provenance du moteur de recherche, une liste de résultats web correspondant à la requête d'utilisateur et au nombre de publicités à afficher sur une page de résultats de moteur de recherche parmi un nombre ajusté de créneaux publicitaires disponibles, sur la base des informations transmises concernant le navigateur web et la visibilité de l'interface de navigateur web affichée sur le dispositif utilisateur.

9. Support de stockage lisible par ordinateur selon la revendication 8, dans lequel les informations concernant la visibilité de l'interface utilisateur de navigateur web (202a ; 202b) comprennent une ou plusieurs caractéristiques parmi une hauteur d'une interface utilisateur de navigateur web, une largeur de l'interface utilisateur de navigateur web, un point d'origine pour un coin de l'interface utilisateur de navigateur web, un état du navigateur web, ou une zone visible de l'interface utilisateur de navigateur web.
